# EUROPEAN PATENT SPECIFICATION

(11) **EP 1 084 810 B1**
(45) Date of publication and mention of the grant of the patent: **27.08.2003**
(21) Application number: 98934134.2
(22) Date of filing: 03.04.1998
(51) Int. Cl.: B29B 17/00, B29B 17/02

(54) **DEVICE FOR DESTROYING TYRES WITH METALLIC CORDS USING ELECTRIC DISCHARGES**
VERFAHREN ZUR ZERSTÖRUNG VON METALLGÜRTEL ENTHALTENDEN REIFEN UNTER BENUTZUNG ELEKTRISCHER ENTLADUNGEN
DISPOSITIF PERMETTANT DE DETRUIRE A L'AIDE DE DECHARGES ELECTRIQUES DES PNEUS COMPORTANT UN CABLE METALLIQUE

(43) Date of publication of application: 21.03.2001
(73) Proprietor: Bedjukh, Alexandr Radiyevich, Kiev, 254215 (UA); Youssef, Hares, Kiev, 04108 (UA)
(72) Inventor: BEDJUKH, Alexandr Radiyevich, Kiev, 254215 (UA); PARUBOCHAYA, Tatiyana Vasilievna, Kiev, 253222 (UA); BUTKO, Valery Grigorievich, Kiev, 252010 (UA)
(74) Representative: Finck, Dieter, Dr.Ing.
(86) International application number: PCT/UA98/00005
(87) International publication number: WO 99/051412

(56) References cited:
- WO-A-95/19876
- WO-A1-97/44171
- DE-A1- 3 924 145
- RU-C- 2 039 650
- RU-C1- 2 059 436
- RU-C1- 2 072 263
- RU-C1- 2 080 183
- SU-A- 1 039 735

## Description

### Technical Field

The present invention relates to the electrical circuitry and construction of devices for destroying tyres with metallic cords using electric discharges. Said devices are designed to separate metal from rubber for their following individual salvaging by means of any known method, e.g. melting metal and utilising rubber crumb in production of flexible pavement and rubber articles, such as roofing, hydraulic insulating materials, heat-insulating and sound-insulating materials. The invention also relates to a method for destroying tyres with metallic cords.

### Background Art

It is known that tyres of pneumatic wheels for vehicles, that cannot be restored, are one of the gravest pollutants of the environment and are at the same time a valuable source of recoverable refuse. That is why the problem of salvaging such tyres is the more severe the more economically developed a certain country is and the higher the density of its population. Therefore, the technological means for the solution of this problem must accommodate to basic conditions which are rather difficult to combine, such as ecological safety, efficiency and possibility of sufficiently complete salvaging of tyres.

The simplest solution, incineration, was widely used in a number of countries until quite recently. Thus, up to 45% of worn-out tyres in Germany and in the Netherlands and up to 40% of worn-out tyres in Japan used to be incinerated *(Tire Recycling Plant Tire Up,* "Modern Tire Dealer", 1987, No. 8, p. 6). However, this is accompanied by the formation of a complex of toxic substances, particularly sulphur-containing substances, whose exhaust is so environmentally dangerous that this trumps the benefits of heat recovery and of residual metal salvaging.

Therefore, more preferable are technological means providing for destruction of worn-out tyres with separation of rubber from metal.

The most widely used devices for destroying tyres by mechanical crushing at ambient temperature ("Gummibereitung", 1987, Bd. 63, No. 10, p. 102-104) or with deep freezing of rubber (*Vorbildliches Recycling alter Reifen* in Kall/Eitel, "Gummibereitung", 1987, Bd. 63, No. 10, p. 97-100) with the following separation of components are not very effective.

Actually, the mechanical shredding of resilient rubber together with metallic cords and crushing the shreds are very energy-intensive and lack efficiency. Moreover, due to the low thermal conductivity of rubber, the size of tyre shreds to be frozen must not be greater than 3 cm in diameter, which also leads to the increase in the specific energy consumption for shredding; mechanical crushing of the frozen pieces does not provide for homogeneous (in terms of grading) semifinished products with the result that a certain proportion of rubber is discharged together with the metal during the magnetic separation.

It has been observed that a preparatory electric-heat treatment of tyres reduces the loss of rubber and simplifies the segregation of metallic cords.

In the simplest case (DE 2900655 A1), the device of such a type comprises: - means for delivering tyres having their sidewalls cut for destruction,
- a destruction system in the shape of a current source provided with contactors for connection to metallic cords, which source heats the cord wire providing for burning out the adjacent plies of rubber, and
- an attachment for discharging the products of the destruction from the working area.

Of course, for such a prolonged electric-heat treatment one of the above-mentioned disadvantages of the tyre incineration is characteristic (though to a lesser degree), namely the toxic discharge pollutes the atmosphere and endangers the service personnel. Besides, the long heating is not effective and leads to high specific energy consumption. Moreover, the described device is effective only in processing those tyres provided with such metallic cords that thread through the breaker strip from one sidewall to the other, because only in such a case, substantially all cord wires can be brought into secure galvanic contact with the source of electrical current after the sidewalls are cut off. And, finally, the problem occurs that the cut-off sidewalls have to be salvaged seperately.

Heating of all the mass of metal inside the tyres is provided in devices with inductive heaters (DE 3911082 A1; EP 0478774 A1). However, the above-mentioned disadvantages of electric-heat destruction are even greater.

Said disadvantages can be overcome with the help of electric pulse destruction of cord wires. Such a process generally includes the step of passing short pulses of electric current of high density of power through the cord wires. This leads to heat emission mainly on the boundaries of crystal grains of metal with the destruction of cord wires in an explosive manner.

Known in the art is a device of the described type WO 95/19876 which comprises:
means for cutting off tyre sidewalls (in one embodiment);
means for delivering tyres for destruction;
a tyre destruction system comprising:
   - a pulse-discharge unit based either on a capacitor bank or on an accumulative reactive LC-circuit, and
   - an axially symmetrical means for galvanic or electromagnetic connection of the pulse-discharge unit to a metallic cord made respectively either in the form of two current conducting members for fixing the tyre to be destroyed mounted for relative reciprocating motion and having working surfaces in the shape of truncated cones facing each other (by the smaller bases in particular) or in the form of the primary winding of a transformer that in any case must be coaxial with the tyre to be destroyed and for this reason can be located either along the geometric axis of the tyre or encompass the tyre;
at least one means for discharging the products of the destruction from the working area and, preferably,
a protective chamber.

The tyre destruction system based on the accumulative reactive LC-circuit and the means for electromagnetic connection of the pulse-discharge unit to a metallic cord in the form of the primary winding of a transformer seems to be preferential as far as it principally can be used for destroying whole tyres. However, experimental studies have shown that the galvanic connection between the pulse current source and metallic cords (with the sidewalls being cut off) is more advantageous in terms of energy than the electromagnetic connection.

Actually, in case of galvanic connection of cord wires to the bank of capacitors, the specific consumption of electricity per unit of mass of metal segregated from the tyres does not essentially depend on the whole mass of metal in the tyre and happens to be the lower the higher the energy density in the pulse and the shorter the pulse. Moreover, eddy currents can be induced powerful enough to destroy the cord wires even in that portion of the cords (neglectable as a rule) that fails to come in galvanic contact with the pulse-discharge unit (e.g. because it does not fit properly to the current conducting fixing members). As far as the electromagnetic (transformer) transfer of energy from reactive LC-circuit to metallic cordis concerned, its efficiency is the lesser the greater the mass (and inductance) of the metal contained in the tyre to be destroyed.

However, there are tyres wherein cutting off the sidewalls does not reveal the ends of an essential proportion of their cord wires and which, accordingly, cannot be destroyed efficiently by the known methods by means of galvanic connection to a pulse-discharge unit. As a rule, this concerns large size tyres, whose destruction as a whole (without cutting off the sidewalls) in accordance with a 'transformer scheme' is also not efficient because of the above-mentioned reasons.

Thus, the improvement in the design of the devices for electric pulse destruction of tyres having metallic cords after cutting off the sidewalls is a pressing question.

### Disclosure of the Invention

The invention is based on the task to create, by improving the design on the whole and the axially symmetrical means for galvanic connection of the pulse-discharge unit to a metallic cord in particular, firstly, such a device for destroying tyres with metallic cords using electric discharges, which provides for effective destruction of tyres of different sizes, whose essential portion of cord wires cannot be brought into direct galvanic contact with a pulse current source after cutting off the sidewalls, and secondly, to create a still more improved device by enhancing this device with a means for destroying the cut-off sidewall rings, that provides for substantially complete separation of metal from rubber in tyres.

The first main part of the task is solved in that in a device for destroying tyres with metallic cords using electric discharges comprising means for cutting off the sidewalls of tyres, means for delivering tyres with cut-off sidewalls for destruction, a tyre destruction system in the shape of a pulse-discharge unit based on capacitors which is provided with an axially symmetrical means for connection to metallic cords in the form of two current conducting fixing members having the shape of truncated cones on the side of their working surfaces and at least one means for discharging the products of the destruction from the working zone, according to the invention, the axially symmetrical means for connection of the pulse-discharge unit to metallic cords is provided with an additional current conducting protrusion which is arranged coaxially relative to both current conducting fixing members, being galvanically connected to one of them and electrically isolated from the other.

Actually, the pulse current flows in opposite directions through said protrusion and through the cord wires of the tyre being destroyed when the device of the invention is used. Such an arrangement provides for the simultaneous achievement of two technological effects:
firstly, the combined electrical inductance of said means for connection of the pulse-discharge unit to a metallic cord and the very metallic cord decreases and, correspondingly, the duration of the pulse shortens while the amplitude and density of current increase therein,
secondly, according to the Ampere law, the conductors along which the currents flow in opposing directions come in mechanical interaction, and hence a repulsive mechanical impulse (so called "magnetic impulse") appears between said protrusion and all cord wires of the tyre being destroyed, said impulse growing in proportion to the increase in the amplitude of the current in the destructive pulse.

Combination of said effects, allows the efficiency of separation of metallic cord from rubber to be essentially increased when destroying (especially large size) tyres and particularly in case of incomplete galvanic contact between cord wires and the pulse-discharge unit.

A first additional characteristic feature consists in that the additional current conducting protrusion is made in the shape of a central rod, which is preferable when destroying small size tyres.

A second additional characteristic feature consists in that the central rod is provided with a support platform, whereon a dielectric pad and one of the fixing members are placed, and which is rigidly secured to the immobile base at one side, while it is operatively connected to the second fixing member at the other side. Such an embodiment of the central rod and its interconnections with the remaining parts of the axially symmetrical means for connection of the tyres to be destroyed to the pulse-discharge unit simplifies the delivery of tyres and increases the reliability of their retaining during the discharge of capacitors.

A third characteristic feature, additional to the second feature, consists in that the central rod and the second fixing member are made in the form of a 'bolt-nut' couple, which allows tyres of different standard sizes to be destroyed by controlling the force of the contact between the cut sidewalls of tyres and fixing members depending on the rigidity of tyres.

A fourth characteristic feature, additional to the second feature, consists in that the central rod is provided with a stop in the middle part, while the second fixing member is made in the form of a knock-down coupling. This embodiment is preferable when tyres of the same standard size are to be destroyed in a line.

A fifth additional characteristic feature consists in that the additional current conducting protrusion is made in the shape of a peripheral ring. This allows a substantial simplification of the means for guarding the zone of tyre destruction.

A sixth characteristic feature, additional to the fifth feature, consists in that the peripheral ring is made in the form of the side wall for a 'bottom-cover' couple comprising two parts overlying one another and having ring shaped inner sides as well, which essentially turns this part of the device into a protective chamber.

A seventh additional characteristic feature, directed to the solution of the second part of the problem, consists in that the device for destroying tyres with metallic cords using electric discharges is additionally provided with a system for destroying the sidewall rings, which comprises an inductor connected to the pulse-discharge unit, a support assembly for the cut-off sidewall rings and a clamp mounted for reciprocating motion. Thus, a complete destruction of tyres by the use of electric discharges is provided.

An eighth characteristic feature, additional to the seventh feature, consists in that the system for destroying the sidewall rings is provided with a second inductor also connected to the pulse-discharge unit, which facilitates destroying the sidewall rings having the remainder of cord wires.

### Brief Description of the Drawings

The invention is further explained by way of detailed description of the design and operation of the claimed device for destroying tyres with metallic cords using electric discharges with reference to the accompanying drawings, in which:
FIG. I is a block diagram of the device of the invention;
FIG. 2 is a block diagram of the pulse-discharge unit based on capacitor high-voltage modules provided with a remote control panel;
FIG. 3 is a circuit diagram of a high-voltage capacitor module included in the pulse-discharge unit;
FIG. 4 is an axially symmetrical means for galvanic connection of the pulse-discharge unit to metallic cords (provided with a central protrusion);
FIG. 5 is an axially symmetrical means for galvanic connection of the pulse-discharge unit to metallic cords (provided with a peripheral protrusion);
FIG. 6 is a lay out diagram of a symmetrical arrangement of the high-voltage capacitor modules with respect to the means for galvanic connection of the pulse-discharge unit to metallic cords;
FIG. 7 is a lay out diagram of an asymmetrical Arrangement of the high-voltage capacitor modules with respect to the means for galvanic connection of the pulse-discharge unit to metallic cords;
FIG. 8 is a sectional view of the system for destroying the sidewall rings;
FIG. 9 is a sectional view of the system for destroying the sidewall rings having a remainder of metallic cords.

### Best Mode for Carrying out the Invention

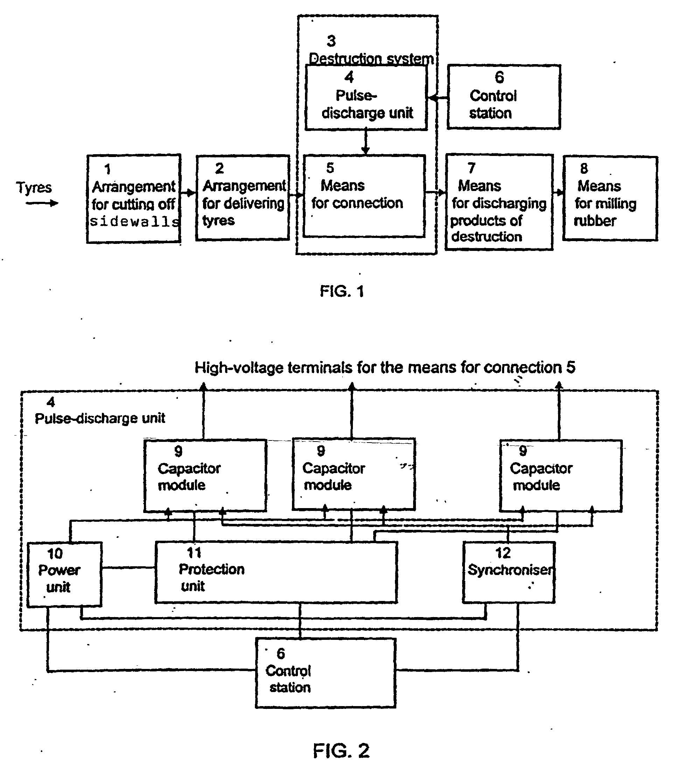

Referring to FIG. 1, the claimed device for destroying worn-out tyres with metallic cords generally comprises the following main parts:
an arrangement 1 (of any design) for cutting off tyre sidewalls, which can be made, for example, in the shape of two or more commercially available cutting heads and which provides for access to the ends of the majority of cord wires in the tyre breaker;
an arrangement 2 (of any design as well) for delivering the cut-off tyres for destruction, made so as to accommodate for the size and mass of tyres, e.g. in the shape of a commercially available belt conveyer or moving carrier and/or an automatic manipulator;
a destruction system 3 comprising a pulse-discharge unit 4 and axially symmetrical means 5 for mainly galvanic connection of the pulse-discharge unit 4 to metallic cords;
a remote control station 6 for receiving data on the conditions of the destruction system 3 and supplying the latter with the controlling information;
means 7 (of any design) for discharging the products of the tyre destruction from the working zone, which can comprise, for example, a mechanical conveyer for delivering pieces of metal-free rubber to further mincing and a pneumatic conveyer for delivering metal particles into a collector (not shown).

It is expedient to arrange means 8 for crushing and milling rubber at the output of the device for destroying worn-out tyres. Similar to the equipment used nowadays for production of rubber crumb from tyres having textile cords, it can comprise: a commercially available mechanical crusher, at least one mechanical mill (for respective pre-crushing and further mincing of pieces of rubber into the crumb of prescribed size) and a set of sieves.

The pulse-discharge unit 4 (FIG. 2) is made on the basis of at least one, preferably a plurality of similar high-voltage capacitor modules 9 for accumulation of electrical charges and their simultaneous pulse discharge on the metallic cords of the tyres being destroyed. The pulse-discharge unit 4 is equipped with:
a power unit 10 for charging the high-voltage capacitor modules 9, which generally comprises a transformer and a rectifier (not shown);
a unit 11 for protection of high-voltage equipment from sparking and possible short circuiting in the electric circuits, which provides for control of the proper operation of high-voltage components and for switching off components, which do not properly work, and for signalization by means known to those skilled in the art, and
a synchronizer 12 for synchronously energizing the high-voltage capacitor modules 9, which is generally equipped with a high-voltage low-current single-pulse generator and connected to the control inputs of standard electronic gaps of all the high-voltage capacitor modules 9.

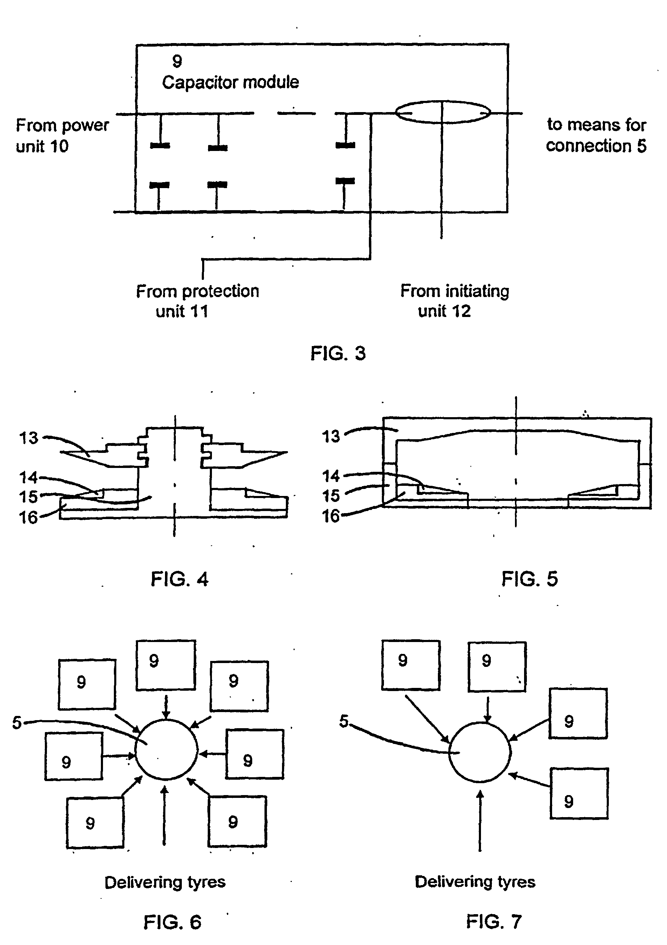

Each module 9 (shown in FIG. 3) comprises at least one, preferably a plurality of high-voltage capacitors, well known to those skilled in the art and thus not shown in drawings, connected in parallel and a standard electronic gap for their connection to the metallic cords of the tyres to be destructed through said means 5.

The axially symmetrical means 5 for galvanic connection of the high-voltage capacitor modules 9 to metallic cords (FIGS. 4 and 5) independently of the form of arrangement comprises two current conducting fixing members 13 and 14, having working surfaces in the shape of truncated cones and an additional current conducting protrusion 15 located coaxially to both said fixing members 13 and 14, galvanically connected to one of them and electrically isolated from the other by means of a dielectric pad 16.

The first preferable embodiment of the axially symmetrical means 5 (FIG. 4) comprises an additional current conducting protrusion 15 in the shape of a central essentially cylindrical rod whose diameter must preferably allow a slide fit of the tyre to be destroyed about its inner diameter. Such rod-protrusion 15 is preferably provided on its one side with a round (in plan) supporting platform for locating a dielectric pad 16 and a second fixing member 14 thereupon and rigidly connected, for example, to a stationary casing of a protective chamber (not shown); and on its other side, the rod-protrusion 15 supports the first fixing member 13 during operation.

To provide for such support, the fixing member 13 and the rod-protrusion 15 may be fabricated in different ways, e.g. in the form of a 'bolt-nut' couple (preferably with a buttress thread), as it is schematically shown in the drawing. Another variant is possible (not shown but understood by those skilled in the art) wherein the rod-protrusion 15 has a shoulder in its middle portion in the shape of a plurality of radial protrusions or a continuous ring collar, and the fixing member 13 is made in the form of an assembled-disassembled coupling having at least two portions to be brought in contact with said shoulder in the operative mode.

However, independently from the embodiment of the fixing member 13 when forming the protrusion 15 in the shape of a rod, a protective chamber is needed (not shown).

The second preferable embodiment of the axially symmetrical means 5 (FIG. 5) comprises an additional current conducting protrusion 15 in the shape of a peripheral ring whose inner diameter preferably allows a slide fit of the tyre to be destroyed about its outer diameter.

It is expedient that the peripheral ring-protrusion 15 is made in the shape of a side wall of a 'bottom-cover' couple comprising two parts of the same diameter overlapping each other, having ring shaped inner sides, and being essentially a protective chamber.

The following conditions of location of high-voltage capacitor modules 9 with respect to the axially symmetrical means 5 are expedient to be complied with for additional (besides of electrical) synchronisation of operation of all the high-voltage capacitor modules and reducing their total capacity necessary for destruction of tyres of each specific standard size:
these modules 9 must be located in symmetry substantially equiangularly and equidistantly from the protrusion 15, as shown in FIG. 6, if the shape, sizes and mutual arrangement of the means of service and guarding of the destruction system 3 allow such a variant, and all supplying electric wires must have as closely similar and as small as possible magnitudes of inductance;
in case of the compelled asymmetry of the arrangement of these modules 9 relative to the protrusion 15 (FIG. 7), the equalization and minimization of the magnitudes of inductance of the supplying electric wires can be provided by changes in their sizes and/or shape (e.g. when utilizing strip transmission lines, the growth of inductance can be compensated by the corresponding increase in their width when increasing the length).

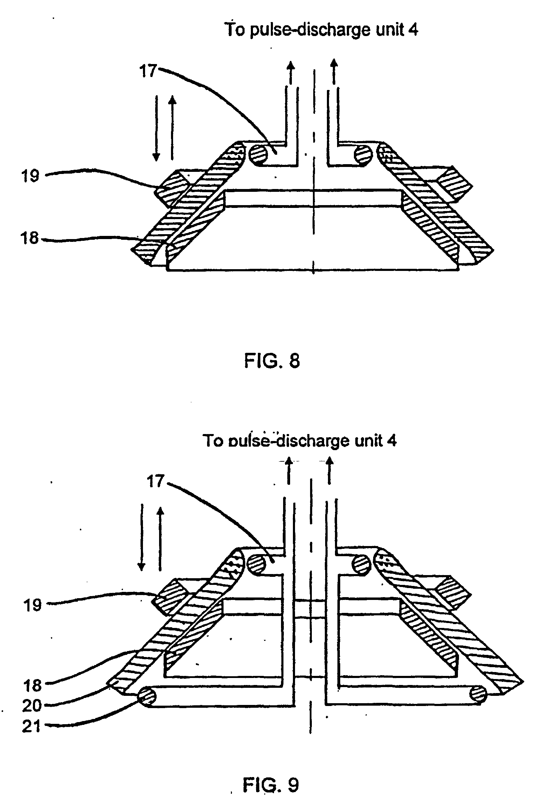

It is expedient to furnish the device of the invention with an additional system for destruction of sidewall rings, which generally comprises (FIG. 8):
an inductor 17 made, for example, in the form of one or more turns of a conductor connected to the pulse-discharge unit 4,
a support assembly 18 for placing the sidewall rings and
a movable clamp 19 mounted particularly for reciprocating motion.

In case the cut-off sidewalls of tyres contain the remainder of a metal cord 20, it is expedient to complete the system for destruction of sidewall rings with a second inductor 21 also connected to the pulse-discharge unit 4 either directly or in parallel with the inductor 17 as shown in FIG. 9.

The device of the invention is used in the following way.

After cutting off the sidewalls in the arrangement 1, each next tyre is delivered by the arrangement 2 to the destruction system 3 and is fixed between the current conducting fixing members 13 and 14 of the axially symmetrical means 5. When utilizing the axially symmetrical means 5, such as shown in FIG. 4, a tyre is placed on the current conducting protrusion-rod 15 against the lower (stationary) current conducting fixing members 14, and then the upper current conducting fixing members 13 is located (e.g. by screwing), the cut sidewalls being fixed and the uncovered (due to cutting) ends of the cord wires being brought into galvanic contact with pulse-discharge unit 4.

Similarly, when utilizing the axially symmetrical means 5 as shown in FIG. 5, a tyre is placed on the lower (stationary) current conducting fixing members 14 on the 'bottom' of the lower part of the peripheral ring-protrusion 15, and then its upper part is located in the way of a 'cover' whose weight performs the fixing of the cut sidewalls.

The power unit 10 charges all the capacitors of the high-voltage capacitor modules 9 from the stationary power supply or any other source of power in accordance with the commands from the remote-control station 6, and then the synchronizer 12 initiates these modules 9.

A current pulse, passed through the cord wires brought into galvanic contact with the current conducting fixing members 13 and 14, generates eddy currents also in those wires whose ends were left uncovered when the sidewalls were off. When doing this, such an intensive emission of heat takes place in practically all cord wires along the boundaries of crystal grains of metal within several milliseconds that the metal bursts and the major mass of the formed small particles (usually powder-like) destroy the tyre breaker and tread and fly out from the channels produced in the rubber mainly as a result of its mechanical repulsion and to a lower extent as a result of its burning along the surface of contact with the cord wires.

Due to the short duration of the current pulse and consumption of the major portion of energy for destroying the metallic cord, the rubber mass has no time to warm up notably. That is why substantially no volatile toxic substances are emitted from said mass, and the process is environmentally friendly. Independently of the fact whether the metallic cord of the tyre being destroyed happens to be the outer (FIG. 4) or the inner (FIG. 5) electrode of the coaxial couple, the axially symmetrical means 5 equipped with the protrusion 15 provides for the opposite direction of currents in metallic cords and in the protrusion 15 during the pulse discharge of the high-voltage capacitor modules 9. This promotes, as mentioned above, the decrease in the combined electric inductance of said means 5 and the metallic cords, shortening the duration of the electric pulse and increasing the amplitude and density of the current therein and, secondly, the manifestation of repulsive mechanical impulses in metallic cords of the tyre being destroyed resulting from the 'magnetic impulse', which are the stringer the higher the amplitude of the current in the destructive electric pulses.

Similarly, each cut-off sidewall ring is placed on the support assembly 18 and is fixed with a clamp 19; then an inductor 17 is brought thereto (as sown in FIG. 8) or (in case of presence of the remainder of cord wires in the sidewall ring) both inductors 17 and 21 (FIG. 9) are brought thereto, and metal is segregated from rubber during the pulse discharge of high-voltage capacitor modules 9 on the inductor(s).

The products of tyre destruction are discharged from the working zone with the help of the means 7 by way of supplying pieces of rubber freed from metal to the means 8 for crushing and milling, and metal particles are sent to a collector, whereafter the cycle of destruction is repeated. The unit 11 for protection of high-voltage equipment from sparking and possible short circuiting in the electric circuits controls the operation of the device, signalizes on failures and cuts down the components, which do not work properly.

### Industrial Applicability

The proposed device for destroying tyres using electric discharges can be widely used for the ecologically secure and energetically advantageous processing of accumulated waste from tyres with metallic cords. The material obtained during this processing, namely metallic powder and rubber crumb, can easily be used for the utilization of a large number of useful products.

## Claims

1. A device for destroying tyres with metallic cords using electric discharges comprising means for cutting off the beads of tyres, means (2) for delivering tyres with cut beads for destruction, a tyre destruction system (3) in the shape of a pulse-discharge unit (4) based on capacitors which is provided with an axially symmetrical means (5) for connection to metallic cords in the form of two current conducting fixing members (13, 14) having the shape of truncated cones on the side of their working surfaces and at least one means (7) for discharging the products of the destruction from the working zone, ***characterised* in that** the axially symmetrical means for connection of the pulse-discharge unit to metallic cords is provided with an additonal current conducting protrusion (15) which is arranged coaxially and on the same level relative to both current conducting fixing members (13, 14), being galvanically connected to one of them and electrically isolated from the other.

2. The device of claim 1 ***characterised* in that** the additional current conducting protrusion (15) is made in the shape of a central rod.

3. The device of claim 2 ***characterised* in that** the central rod is provided with a support platform, whereon a dielectric pad (16) and one of the fixing members (14) are placed, and is rigidly secured to the immobile base at one side thereof, while it is operatively connected to the second fixing member (13) at the other side.

4. The device of claim ***3 characterised* in that** the central rod (15) and the second fixing member (13) are made in the form of a 'bolt-nut' couple.

5. The device of claim ***3 characterised* in that** the central rod (15) is provided with a stop in the middle part, while the second fixing member is made in the form of a knock-down coupling.

6. The device of claim 1 ***characterised* in that** the additional current conducting protrusion (15) is made in the shape of a peripheral ring.

7. The device of claim ***6 characterised* in that** the peripheral ring is made in the form of a side wall for a 'bottom-cover' couple comprising two parts overlying one another and having inner sides.

8. The device of claim 1 ***characterised* in that** it is provided with a system for destroying the bead rings, which comprises a support assembly (18) for placing cut-off bead rings, an inductor (17) connected to the pulse-discharge unit (4), and a clamp (19) mounted for reciprocafing motion.

9. The device of claim ***8 characterised* in that** the system for destroying the bead rings is provided with a second inductor (21) also connected to the pulse-discharge unit.

10. Method for destroying tyres with metallic cord in an apparatus according to claim 1, comprising:
a) cutting a tyre into three parts: a middle part (endwall) including tread and breaker with layers of metallic cord wire having exposed ends, and two sideparts (sidewalls) with bead wire,
b) separating the metal and rubber for each part separately, which means:
c) placing the middle part between electrically current conducting fixing members (13, 14) insulated from each other and which are both separately connected to a pulse-dischargeunit (4), one of them having a current conducting protrusion (15) which is arranged coaxially with respect to both fixing members (13, 14), and gating through the cord wires power current pulses of opposite directions in said wire and said protrusion (15) thus causing a magnetic shock to separate metal and rubber from each other, and
d) placing each of said sideparts of the tyre on a support assembly (18) and its fixation (19), mounting an inductor (17) connected to the pulse discharge unit (4) on position when the coil of the inductor (17) is concentrical and as close as possible to the bead wire, and gating a power current pulse through the inductor (17) to cause a magnetic shock separating metal and rubber.

## Patentansprüche

1. Vorrichtung zum Zerstören von Reifen mit metallischen Korden unter Verwendung von elektrischen Entladungen
- mit Einrichtungen zum Abschneiden der Wulste der Reifen,
- mit Einrichtungen (2) zum Anliefern von Reifen mit abgschnittenen Wulsten zur Zerstörung,
- mit einem Reifenzerstörungssystem (3) in Form einer auf Kondensatoren basierenden Impulsentladungseinheit (4), die mit einer axial symmetrischen Einrichtung (5) zum Verbinden mit den metallischen Korden in der Form von zwei stromleitenden Befestigungselementen (13, 14) versehen ist, die die Form von Kegelstümpfen auf der Seite ihrer Arbeitsflächen haben, und
- mit wenigstens einer Einrichtung (7) zum Abgeben der Zerstörungsprodukte aus der Arbeitszone,
**dadurch gekennzeichnet,**
- **dass** die axial symmetrische Einrichtung zum Verbinden der Impulsentladungseinheit mit den metallischen Korden mit einem zusätzlichen stromleitenden Vorsprung (15) versehen ist, der koaxial und auf dem gleichen Niveau bezüglich der beiden stromleitenden Befestigungselemente (13, 14) angeordnet ist, und galvanisch an eines von ihnen angeschlossen und elektrisch vom anderen isoliert ist.

2. Vorrichtung nach Anspruch 1, **dadurch gekennzeichnet, dass** der zusätzliche stromleitende Vorsprung (15) in Form einer zentralen Stange ausgeführt ist.

3. Vorrichtung nach Anspruch 2, **dadurch gekennzeichnet, dass** die zentrale Stange mit einer Trägerplattform versehen ist, auf der ein dieelektrischer Anschluss (16) und eines der Befestigungselemente (14) angeordnet sind, und starr an einer unbeweglichen Basis auf einer Seite davon befestigt ist, während sie funktionsmäßig mit dem zweiten Befestigungselement (13) auf der anderen Seite verbunden ist.

4. Vorrichtung nach Anspruch 3, **dadurch gekennzeichnet, dass** die zentrale Stange (15) und das zweite Befestigungselement (13) in Form einer "Schrauben-Mutter"-Verbindung ausgeführt sind.

5. Vorrichtung nach Anspruch 3, **dadurch gekennzeichnet, dass** die zentrale Stange (15) mit einem Anschlag im Mittelteil vesehen ist, und das zweite Befestigungselement in Form einer Zerlegkupplung ausgebildet ist.

6. Vorrichtung nach Anspruch 1, **dadurch gekennzeichnet, dass** der zusätzliche stromleitende Vorsprung (15) in Form eines Umfangsrings ausgeführt ist.

7. Vorrichtung nach Anspruch 6, **dadurch gekennzeichnet, dass** der Umfangsring in der Form einer Seitenwand für ein "Bodenabdeck"-Paar ausgeführt ist, das zwei Teile aufweist, die übereinander liegen und Innenseiten haben.

8. Vorrichtung nach Anspruch 1, **dadurch gekennzeichnet, dass** sie mit einem System zum Zerstören der Wulstringe versehen ist, welches eine Halteanordnung (18) zum Platzieren abgeschnittener Wulstringe, einen mit der Impulsentladeeinheit (4) verbundenen Induktor (17) und eine Klemme (19) aufweist, die für eine Hin- und Herbewegung angebracht ist.

9. Vorrichtung nach Anspruch 8, **dadurch gekennzeichnet, dass** das System zum Zerstören der Wulstringe mit einem zweiten Induktor (21) versehen ist, der ebenfalls mit der Impulsentladungseinheit verbunden ist.

10. Verfahren zum Zerstören von Reifen mit metallischem Kord in einer Vorrichtung nach Anspruch 1, bei welchem
a) ein Reifen in drei Teile, nämlich einen Mittelteil (Endwand) mit Lauffläche und Zwischenschicht mit Lagen aus Metallkorddraht, der freiliegende Enden hat, und zwei Seitenteilen (Seitenwänden) mit Wulstdraht,
b) Trennen des Metalls und des Kautschuks gesondert für jedes Teil, was bedeutet:
c) Anordnen des Mittelteils zwischen elektrischen Strom leitenden Befestigungselementen (13, 14), die voneinander isoliert sind und die beide getrennt an eine Impulsentladeeinheit (4) angeschlossen sind, wobei eines von ihnen einen stromleitenden Vorsprung (15) hat, der koaxial bezogen auf die beiden Befestigungselemente (13, 14) angeordnet ist und durch die Korddrähte Starkstromimpulse mit entgegengesetzten Richtungen in dem Draht und dem Vorsprung (15) durchlässt, wodurch ein magnetischer Stoß zum Trennen von Metall und Kautschuk voneinander verursacht wird,
d) Anordnen eines jeden der Seitenteile des Reifens auf einer Halteanordnung (18) und ihrer Befestigung (19), die einen Induktor trägt, der mit der Impulsentladeeinheit (4) an einer Stelle verbunden ist, wenn die Wicklung des Induktors (17) konzentrisch und so nahe wie möglich zum Wulstdraht ist, und die einen Starkstromimpuls durch den Induktor (17) hindurch lässt, um einen magnetischen Stoß herbeizuführen, der Metall und Kautschuk trennt.

## Revendications

1. Dispositif permettant de détruire à l'aide de décharges électriques des pneus comportant un câble métallique, comprenant un moyen pour couper les talons de pneus, un moyen (2) pour distribuer des pneus avec les talons coupés pour destruction, un système de destruction de pneus (3) sous la forme d'une unité à décharges par impulsions (4) basé sur des condensateurs qui est muni d'un moyen à symétrie axiale (5) pour raccordement à des câbles métalliques sous la forme de deux éléments de fixation conducteurs de courant (13, 14) ayant la forme de troncs de cône du côté de leurs surfaces de travail et au moins un moyen (7) pour décharger les produits de la destruction à partir de la zone de travail, **caractérisé en ce que** le moyen à symétrie axiale pour raccordement de l'unité à décharges par impulsions aux câbles métalliques est muni d'une saillie conductrice de courant supplémentaire (15) qui est disposée coaxialement et au même niveau par rapport aux deux éléments de fixation conducteurs de courant (13, 14), connectée par couplage galvanique à l'un d'entre eux et isolée électriquement de l'autre.

2. Dispositif selon la revendication 1, **caractérisé en ce que** la saillie conductrice de courant supplémentaire (15) est fabriquée sous la forme d'une tige centrale.

3. Dispositif selon la revendication 2, **caractérisé en ce que** la tige centrale est équipée d'une plate-forme support, sur laquelle sont placés une plaquette diélectrique (16) et un des éléments de fixation (14), et est fixée de manière rigide à la base immobile à un de ses côtés, tandis qu'elle est connectée fonctionnellement au deuxième élément de fixation (18) à l'autre côté.

4. Dispositif selon la revendication 3, **caractérisé en ce que** la tige centrale (15) et le deuxième élément de fixation (13) sont fabriqués sous la forme d'une paire "boulon-écrou".

5. Dispositif selon la revendication 3, **caractérisé en ce que** la tige centrale (15) est munie d'une butée dans la partie médiane, tandis que le deuxième élément de fixation est fabriqué sous la forme d'un connecteur démontable.

6. Dispositif selon la revendication 1, **caractérisé en ce que** la saillie conductrice de courant supplémentaire (15) est fabriquée sous la forme d'un anneau périphérique.

7. Dispositif selon la revendication 6, **caractérisé en ce que** la bague périphérique est fabriquée sous la forme d'une paroi latérale pour une paire "fond-couvercle" comprenant deux parties se superposant et ayant des côtés intérieurs.

8. Dispositif selon la revendication 1, **caractérisé en ce qu'**il est équipé d'un système pour détruire les anneaux de talon, qui comprend un ensemble support (18) pour placer des anneaux de talon coupés, un inducteur (17) connecté à l'unité de décharges par impulsions (4), et une pince (19) montée pour un mouvement de va-et-vient.

9. Dispositif selon la revendication 8, caractérisé en ce le système permettant de détruire les anneaux de talon est équipé d'un deuxième inducteur (21) également connecté à l'unité de décharges par impulsions.

10. Procédé pour détruire des pneus comportant un câble métallique dans un appareil selon la revendication 1, comprenant les étapes consistant à :
a) découper un pneu en trois parties: une partie centrale (bande de roulement) comprenant la bande de roulement et la nappe de renforcement avec des couches de fils câblés métalliques ayant des extrémités dénudées, et deux parties latérales (parois latérales) avec fil d'acier de tringle,
b) séparer le métal et le caoutchouc pour chaque partie individuelle, c'est-à-dire :
c) placer la partie centrale entre les éléments de fixation conducteurs de courant (13, 14) isolés entre eux et qui sont tous les deux connectés séparément à une unité de décharges par impulsions (4), l'un d'eux ayant une saillie conductrice de courant (15) qui est placée coaxialement par rapport aux deux éléments de fixation (13, 14), et appliquer aux fils câblés des impulsions de courant fort de directions opposées dans ledit câble et ladite saillie (15) provoquant ainsi un choc magnétique pour séparer le métal et le caoutchouc l'un de l'autre, et
d) placer chacune desdites parties latérales du pneu sur un ensemble support (18) et sa fixation (19), monter un inducteur (17) connecté à l'unité de décharges par impulsions (4) sur une position lorsque la bobine de l'inducteur (17) est concentrique et aussi rapprochée que possible du fil d'acier de tringle, et appliquer une impulsion de courant fort à travers l'inducteur (17) pour provoquer un choc magnétique séparant le métal et le caoutchouc.
